# EUROPÄISCHE PATENTANMELDUNG

(11) **EP 1 675 040 A1**
(43) Veröffentlichungstag der Anmeldung: **28.06.2006**
(21) Anmeldenummer: 04030731.6
(22) Anmeldetag: 23.12.2004
(51) Int. Cl.: G06K 19/06, B41M 5/398

(54) **Markierung zur Erkennung eines Bauteils und ein Bauteil**

(71) Anmelder: SIEMENS AKTIENGESELLSCHAFT, 80333 München (DE)
(72) Erfinder: Ott, Michael, Dr., 45478 Mülheim an der Ruhr (DE)

(57) **Zusammenfassung**

Strichcodes zur Erkennung eines Produkts oder Bauteils sind bereits mit bloßem Auge erkennbar und können von jedem reproduziert werden.

Die erfindungsgemäße Markierung (1) zur Erkennung eines Bauteils weist beispielsweise magnetische oder magnetisierbare Teilchen auf, die optisch nicht erkennbar sind, aber durch ein entsprechendes Lesegerät eine gegebenenfalls zusätzliche Identifikationskennung ergeben.

## Beschreibung

Die Erfindung betrifft eine Markierung gemäß Gattungsbegriff des Anspruchs 1, die es ermöglicht, ein Bauteil zu identifizieren und ein Bauteil mit einer Markierung gemäß Anspruch 14.

Die DE 200 12 910 U1, die DE 198 08 334 A1, die DE 298 18 322 U1, die DE 102 38 506 A1 offenbaren verschiedene Verfahren zur Herstellung von Information tragenden mikropartikulären Gemischen.

In der DE 101 02 193 A1 und der DE 198 14 318 A1 wird ein Barcode und ein Verfahren zu seiner Herstellung beschrieben, bei dem die Balken verschiedene Breiten haben.

Weiterhin sind bekannt von den alltäglichen Dingen des Lebens aus dem Supermarkt Strichcodes, also eine Abfolge von unterschiedlich breiten schwarzen Strichen auf weißem Hintergrund.

Ebenfalls bekannt zur Diebstahlsicherung sind Magnetstreifen auf Artikeln, die ein bestimmtes magnetisches Moment aufweisen, das beispielsweise einem Lesegerät (Detektor) anzeigt, dass der Artikel noch nicht bezahlt wurde, und die entmagnetisiert oder ummagnetisiert werden, um dem Lesegerät zu signalisieren, dass der Artikel bezahlt wurde. Hier liegt jedoch ein durchgehender, in der Regel rechteckförmiger, Streifen mit einem einzigen magnetischen Moment vor, der jedoch nachgebaut und mit dem entsprechenden magnetischen Moment versehen werden kann.

Die Markierungen sind bereits mit bloßem Auge einfach zu erkennen und relativ leicht zu fälschen.

Es ist daher die Aufgabe der Erfindung eine Markierung vorzuschlagen, die es erlaubt, ein Bauteil zu kennzeichnen, ohne dass deutlich wird, dass eine Codierung oder eine weitere Codierung vorliegt.

Die Aufgabe wird gelöst durch eine Markierung gemäß Anspruch 1 und ein Bauteil gemäß Anspruch 14.

In den Unteransprüchen sind weitere vorteilhafte Maßnahmen aufgelistet, die beliebig in vorteilhafter Art und Weise miteinander kombiniert werden können.

Es zeigen
- Figur 1, 2: erfindungsgemäße Markierungen,
- Figur 3, 4: die Anordnung einer erfindungsgemäßen Markierung auf einem Bauteil,
- Figur 5: ein weiteres Ausführungsbeispiel einer erfindungsgemäßen Markierung zur Erkennung eines Bauteils,
- Figur 6: eine Turbinenschaufel,
- Figur 7: eine Brennkammer,
- Figur 8: eine Gasturbine,
- Figur 9: eine Dampfturbine.

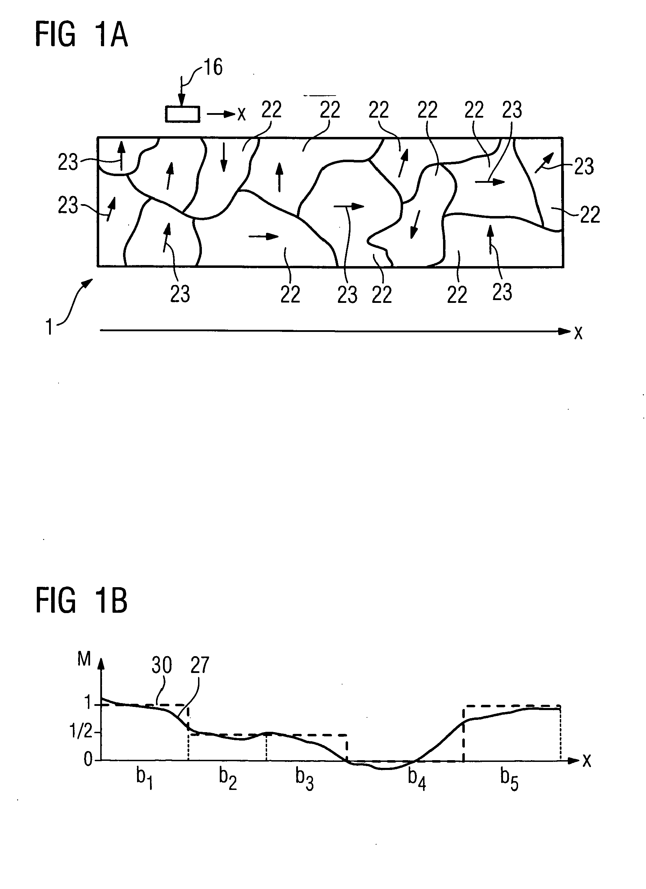

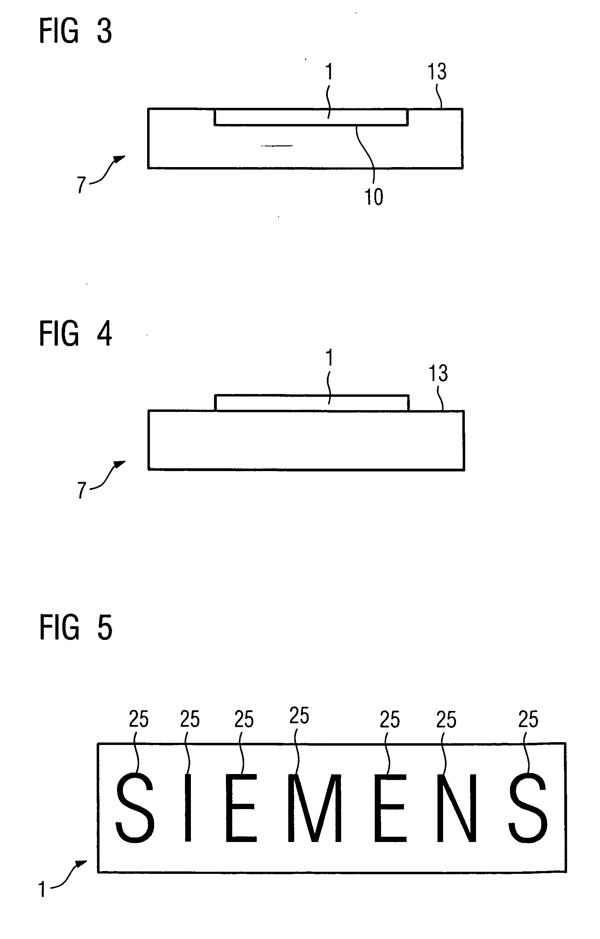

Figur 1 zeigt eine beispielhafte erfindungsgemäße Markierung 1 zur Erkennung eines Bauteils 7, 120, 130, 354, 357 (Fig. 3, 6, 7, 8, 9).
Der Markierung 1 hat hier beispielsweise eine rechteckige Form. Jeder andere längliche Querschnitt oder jede andere Form ist denkbar.
Die Markierung 1 besteht beispielsweise aus mehreren Körnern 22, insbesondere größtenteils aus Körnern 22 (lose Körner 22, versinterte Körner 22, Körner 22 durch Binder miteinander verbunden), insbesondere mindestens zu 70vol% oder 100vol%, die beispielsweise magnetisch oder magnetisierbar sind.

Insbesondere weisen die Körner 22 Korngrößen kleiner 1 Mikrometer, insbesondere 500nm oder 300nm (Nanopartikel) auf, sodass sich feine Strukturen erzeugen lassen.
Die Körner 22 sind beispielsweise mit einem Harz (Binder), insbesondere einem hochtemperaturbeständigen Harz, vermischt und auf ein Bauteil 7 (oder Artikel) aufgebracht.
Bei der Herstellung der Markierung 1 können die Körner 22 mit ihrer magnetischen Orientierung 23 wahllos angeordnet sein. Darum werden die Körner 22 in der Markierung 1 zur Erzeugung einer zusätzlichen Codierung einem Magnetfeld ausgesetzt, sodass sich die Körner 22 in dem Magnetfeld ausrichten.
In der Markierung 1 werden hierzu erfindungsgemäß lokal unterschiedliche magnetische Momente M erzeugt. Ebenso können noch unmagnetische Körner 22 in einem Magnetfeld magnetisiert werden.

Die Markierung 1 kann in einer Ausrichtung x mittels einer entsprechenden Sonde 16, insbesondere einer Hallsonde (oder einem Laser mit polarisiertem Licht bei auf optischen Eigenschaften basierender Markierung 1) abgefahren werden, sodass sich ein entsprechender Verlauf 27 von Werten für die Magnetisierung M (Kennwert) in Ausrichtung X ergibt, wie er in Figur 1b dargestellt ist.
Dieser kontinuierliche analoge Verlauf 27 kann auch bestimmten Zahlenwerten zugeordnet werden, die eine Kurve 30 (gestrichelt) mit diskreten Werten ergibt.
So ist beispielsweise in Figur 1b die Höhe der Magnetisierung M entlang des Verlaufs 27 über eine bestimmte Breite bi den Werten 0, ½ und 1 zugeordnet, wobei die Abfolge 1 - ½ - ½ - 0 - 1 eine eindeutige Identifikation (Bauteiltyp, Herstellungsnummer, Seriennummer, ...) eines Bauteils 7, 120, 130, 155, 354, 357 ergibt, die optisch nicht erkennbar ist und nur erkannt wird, wenn die Hallsonde bzw. der Detektor über die Markierungen verfahren wird. Bei den bekannten Magnetstreifen mit einem magnetischen Moment wird der Detektor nicht über den Magnetstreifen verfahren.

Die Markierung 1 kann ebenso aus einem magnetischen oder magnetisierbaren Blechstreifen bestehen.

Neben der magnetischen Eigenschaft der Körner 22 oder des Blechstreifens bzw. eines Materials können auch elektrische und/oder elektromagnetische oder andere Eigenschaften benutzt werden, die zur Kennzeichnung und Identifikation dienen. So können beispielsweise Körner 22 verwendet werden, die Ferroelektrika sind.

Ebenso können unterschiedliche Materialien für die Körner 22 verwendet werden, die ein unterschiedliches optisches Polarisationsverhalten oder ein unterschiedliches optisches Absorptionsvermögen gegenüber einer elektromagnetischen Strahlung aufweisen.
Die Markierung 1 kann auch Materialien mit verschiedenen Eigenschaften, also beispielsweise magnetische und ferroelektrische Körner aufweisen.

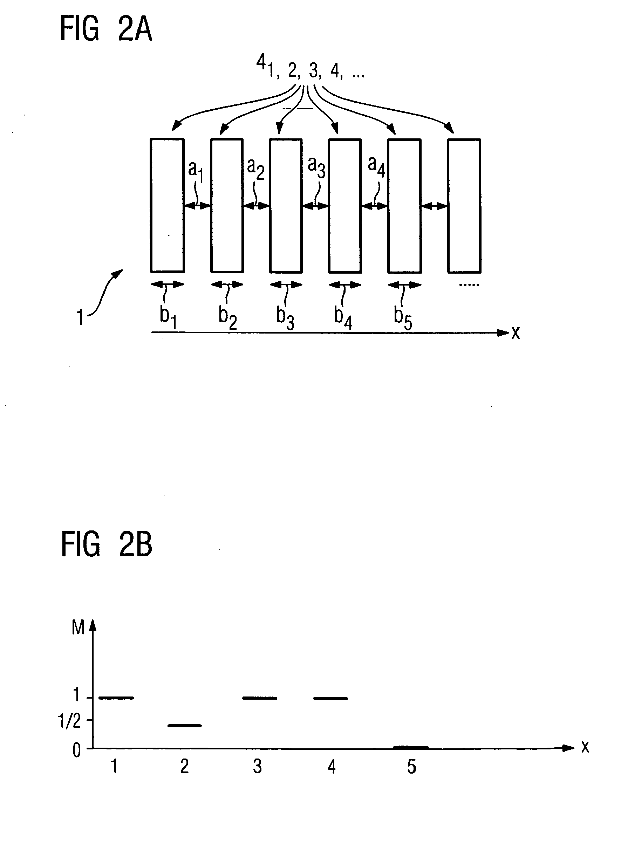

In Figur 2 ist ein weiteres Ausführungsbeispiel der erfindungsgemäßen Markierung 1 dargestellt.
Der Markierung 1 besteht beispielsweise aus mehreren Segmenten 4ᵢ, die beispielsweise gleiche Breiten bi, i=1, 2 ... aufweisen (Fig. 2a). Ebenso weisen die Segmente 4ᵢ einen Abstand aᵢ zueinander auf, sodass die Abfolge von Segmenten 4ᵢ beispielsweise wie ein Strichcode aus dem Supermarkt aussieht.
Alternativ können die Breiten bᵢ der einzelnen Segmente 4ᵢ verschieden sein, so wie die Abstände aᵢ unterschiedlich ausgeprägt sein können.
Dabei kann jedem Segment 4ᵢ aufgrund seiner Materialeigenschaft ein unterschiedlicher Wert zugewiesen werden, der beispielsweise bei 0, ½ oder 1 liegt (Fig. 2b). Andere Zuordnungen sind auch möglich: 0,1; 0; 1/3; 2/3; 1; ....

Es kann jedes Segment 4ᵢ das gleiche Material aufweisen, aber dennoch bezüglich der betrachteten Eigenschaft einen verschiedenen Wert aufweisen, also bspw. verschieden magnetisiert sein.
Das Segment 4ᵢ kann auch verschiedene magnetische (elektrische, elektromagnetische) Materialien aufweisen, die nach Aus-setzung bspw. im gleichen Magnetfeld (Spannung, Licht) unterschiedlich magnetisiert (polarisiert, absorbierend) sind, da die unterschiedlichen Materialien unterschiedliche maximale Werte für die Magnetisierung aufweisen.
Ebenso ist es möglich, dass die einzelnen Segmente 4ᵢ verschiedene Materialien aufweisen (beispielsweise 4₁: optisch total reflektierendes Material, 4₂: optisch absorbierendes Material,...).

So sind durch die erfindungsgemäße Markierung also ein visuell (per Auge) erkennbarer Strichcode und ein visuell nicht erkennbarer Code (entsprechend der jeweiligen Materialeigenschaft) vorhanden.

Die Figur 3 zeigt beispielhaft, wie eine Markierung 1 auf dem Bauteil 7 angeordnet ist.
Die Markierung 1 ist hier beispielsweise in einer Vertiefung 10 angeordnet und ragt beispielsweise nicht aus einer Oberfläche 13 des Bauteils 7 hervor.

Auf der Oberfläche 13 kann eine Beschichtung (MCrA1X) vorhanden sein (nicht dargestellt). Magnetische Eigenschaften lassen sich auch durch eine Beschichtung hindurch detektieren.

Ebenso kann die Markierung 1 auf einer ebenen Oberfläche 13 aufgebracht sein und aus dieser hervorragen (Fig. 4).

Das Bauteil 7 kann ein Bauteil einer Strömungsmaschine, wie z. B. eines Kompressors, einer Turbine eines Flugzeugs oder eine Anlage zur Stromerzeugung oder eine Strömungsmaschine einer Dampfturbine sein. Insbesondere weisen die Bauteile 7 die erfindungsgemäße Markierung 1 auf, die während der Lebensdauer der Strömungsmaschine ausgewechselt werden. Dies sind-z. B. die Schaufeln 120, 130 einer Gasturbine 100 oder die Schaufeln einer Dampfturbine 300, 303. Ebenso können dies die Hitzeschildelemente 155 einer Brennkammer 110 sein.
Bei den Schaufeln 120, 130, 354, 357 wird die Markierung 1 beispielsweise im Bereich des Schaufelfußes eingebracht, wo in der Regel geringere Temperaturen herrschen.
So wird beispielsweise bei Hitzeschildelementen 155 die Markierung 1 auf der kühleren Rückseite aufgebracht. Bei Kompressorschaufeln, die nicht so hohen Temperaturen ausgesetzt sind, kann die Markierung 1 auf der Schaufelplattform oder dem Schaufelblatt vorhanden sein.

Figur 5 zeigt ein weiteres Ausführungsbeispiel der erfindungsgemäßen Markierung 1.
Die Markierung 1 kann numerische oder alphanumerische Abfolgen aufweisen, die Seriennummern, Produktbezeichnungen oder Markennamen beinhalten.
Hier besteht die Abfolge aus einzelnen Buchstaben 25 der Folge SIEMENS.
In den einzelnen Buchstaben des Schriftzuges sind die Körner 22 enthalten und können mit einer Sonde 16 erfasst werden. Dabei kann durch eine entsprechende Magnetisierung ein und derselbe Schriftzug (hier SIEMENS) verschiedenen Identifikationen zugeordnet werden.
So kann beispielsweise der erste Buchstabe (S) nicht magnetisiert werden, der zweite Buchstabe (I) wird magnetisiert, der dritte Buchstabe (E) wird wiederum nicht magnetisiert, ... sodass sich optisch unsichtbar eine Zahlenabfolqe aus einem Schriftcode herauslesen lässt, die sich beliebig variieren lässt, wobei jede Zahlenfolge für ein Bauteiltyp oder eine Herstellungsnummer steht.

Besteht beispielsweise ein Schriftzug aus einer Farbe, so werden magnetische oder magnetisierbare Teilchen der Farbe beigemischt.
Solange die Farbe noch nicht hart ist, können die Körner 22 in einem Magnetfeld gedreht werden.
Alternativ können diese Körner 22 schon beim Gießen des Bauteils 7, 120, 130, 155, 354, 357 mit eingebracht werden, indem beispielsweise die Gussform eine Markierung 1 enthält, die von dem zu gießenden Material umgossen wird.

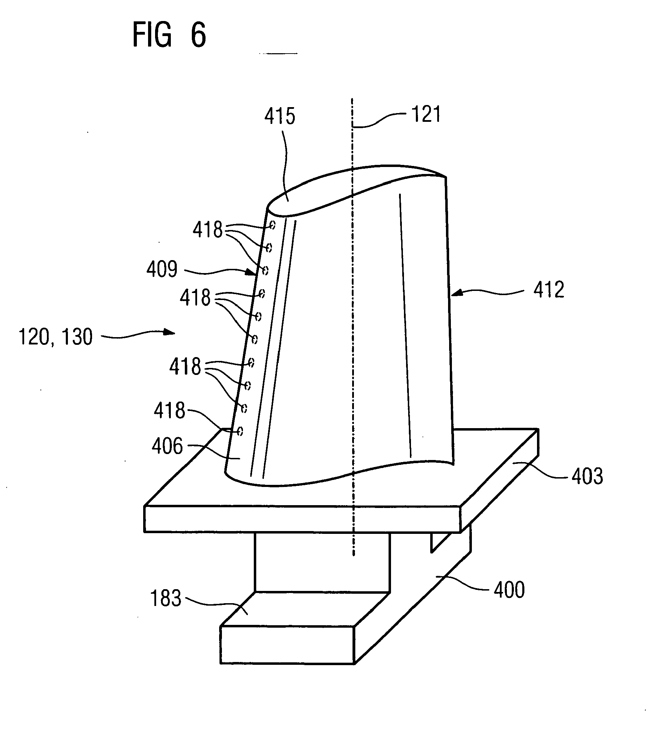

Figur 6 zeigt in perspektivischer Ansicht eine Laufschaufel 120 oder Leitschaufel 130 einer Strömungsmaschine, die sich entlang einer Längsachse 121 erstreckt.

Die Strömungsmaschine kann eine Gasturbine eines Flugzeugs oder eines Kraftwerks zur Elektrizitätserzeugung, eine Dampfturbine oder ein Kompressor sein.

Die Schaufel 120, 130 weist entlang der Längsachse 121 aufeinander folgend einen Befestigungsbereich 400, eine daran angrenzende Schaufelplattform 403 sowie ein Schaufelblatt 406 auf.
Als Leitschaufel 130 kann die Schaufel 130 an ihrer Schaufelspitze 415 eine weitere Plattform aufweisen (nicht dargestellt) .

Im Befestigungsbereich 400 ist ein Schaufelfuß 183 gebildet, der zur Befestigung der Laufschaufeln 120, 130 an einer Welle oder einer Scheibe dient (nicht dargestellt).
Der Schaufelfuß 183 ist beispielsweise als Hammerkopf ausgestaltet. Andere Ausgestaltungen als Tannenbaum- oder Schwalbenschwanzfuß sind möglich.

Die Schaufel 120, 130 weist für ein Medium, das an dem Schaufelblatt 406 vorbeiströmt, eine Anströmkante 409 und eine Abströmkante 412 auf.

Bei herkömmlichen Schaufeln 120, 130 werden in allen Bereichen 400, 403, 406 der Schaufel 120, 130 beispielsweise massive metallische Werkstoffe, insbesondere Superlegierungen verwendet.
Solche Superlegierungen sind beispielsweise aus der EP 1 204 776 B1, EP 1 306 454, EP 1 319 729 A1, WO 99/67435 oder WO 00/44949 bekannt; diese Schriften sind Teil der Offenbarung. Die Schaufel 120, 130 kann hierbei durch ein Gussverfahren, auch mittels gerichteter Erstarrung, durch ein Schmiedeverfahren, durch ein Fräsverfahren oder Kombinationen daraus gefertigt sein.

Ebenso können die Schaufeln 120, 130 Beschichtungen gegen Korrosion oder Oxidation (MCrAIX; M ist zumindest ein Element der Gruppe Eisen (Fe), Kobalt (Co), Nickel (Ni), X ist ein Aktivelement und steht für Yttrium (Y) und/oder Silizium und/oder zumindest ein Element der Seltenen Erden, bzw. Hafnium (Hf)). Solche Legierungen sind bekannt aus der EP 0 486 489 B1, EP 0 786 017 B1, EP 0 412 397 B1 oder EP 1 306 454 A1, die Teil dieser Offenbarung sein sollen.

Auf der MCrAIX kann noch eine Wärmedämmschicht vorhanden sein und besteht beispielsweise aus ZrO₂, Y₂O₄-ZrO₂, d.h. sie ist nicht, teilweise oder vollständig stabilisiert durch Yttriumoxid und/oder Kalziumoxid und/oder Magnesiumoxid. Durch geeignete Beschichtungsverfahren wie z.B. Elektronenstrahlverdampfen (EB-PVD) werden stängelförmige Körner in der Wärmedämmschicht erzeugt.

Wiederaufarbeitung (Refurbishment) bedeutet, dass Bauteile 120, 130 nach ihrem Einsatz gegebenenfalls von Schutzschichten befreit werden müssen (z.B. durch Sandstrahlen). Danach erfolgt eine Entfernung der Korrosion-und/oder Oxidationsschichten bzw. -produkte. Gegebenenfalls werden auch noch Risse im Bauteil 120, 130 repariert. Danach erfolgt eine Wiederbeschichtung des Bauteils 120, 130 und ein erneuter Einsatz des Bauteils 120, 130.

Die Schaufel 120, 130 kann hohl oder massiv ausgeführt sein. Wenn-die Schaufel 120, 130 gekühlt werden-soll, ist sie hohl und weist ggf. noch Filmkühllöcher 418 (gestrichelt angedeutet) auf. Solche Schaufeln 120, 130, die je nach Gasturbinentyp oder Schaufelreihe unterschiedlich sind, können die erfindungsgemäße Markierung 1 aufweisen.

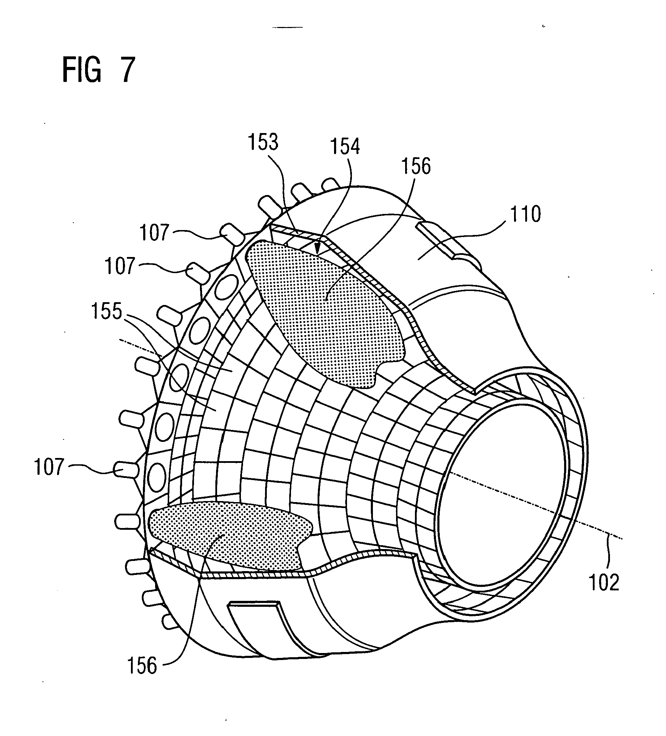

Die Figur 7 zeigt eine Brennkammer 110 einer Gasturbine. Die Brennkammer 110 ist beispielsweise als so genannte Ringbrennkammer ausgestaltet, bei der eine Vielzahl von in Umfangsrichtung um die Rotationsachse 102 herum angeordneten Brennern 107 in einen gemeinsamen Brennkammerraum münden. Dazu ist die Brennkammer 110 in ihrer Gesamtheit als ringförmige Struktur ausgestaltet, die um die Rotationsachse 102 herum positioniert ist.

Zur Erzielung eines vergleichsweise hohen Wirkungsgrades ist die Brennkammer 110 für eine vergleichsweise hohe Temperatur des Arbeitsmediums M von etwa 1000°C bis 1600°C ausgelegt. Um auch bei diesen, für die Materialien ungünstigen Betriebsparametern eine vergleichsweise lange Betriebsdauer zu ermöglichen, ist die Brennkammerwand 153 auf ihrer dem Arbeitsmedium M zugewandten Seite mit einer aus Hitzeschildelementen 155 gebildeten Innenauskleidung versehen, die beispielsweise die erfindungsgemäße Markierung 1 aufweisen.

Jedes Hitzeschildelement 155 ist arbeitsmediumsseitig mit einer besonders hitzebeständigen Schutzschicht ausgestattet oder aus hochtemperaturbeständigem Material gefertigt. Dies können massive keramische Steine oder Legierungen mit MCrAlX und/oder keramischen Beschichtungen sein.

Die Materialien der Brennkammerwand und deren Beschichtungen können ähnlich der Turbinenschaufeln sein.

Aufgrund der hohen Temperaturen im Inneren der Brennkammer 110 kann zudem für die Hitzeschildelemente 155 bzw. für deren Halteelemente ein Kühlsystem vorgesehen sein.

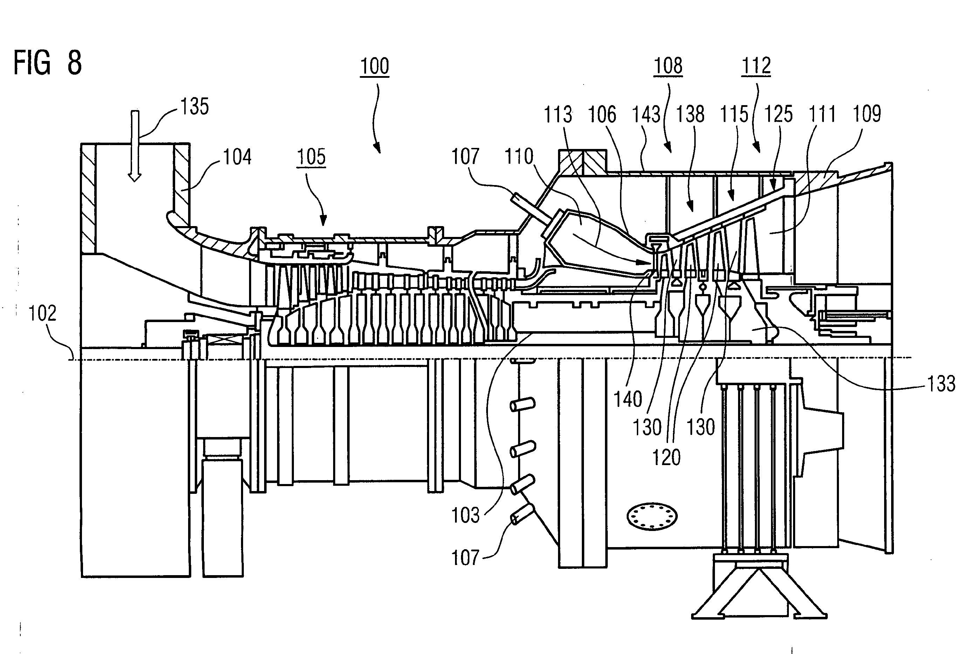

Die Figur 8 zeigt beispielhaft eine Gasturbine 100 in einem Längsteilschnitt.
Die Gasturbine 100 weist im Inneren einen um eine Rotationsachse 102 drehgelagerten Rotor 103 auf, der auch als Turbinenläufer bezeichnet wird.
Entlang des Rotors 103 folgen aufeinander ein Ansauggehäuse 104, ein Verdichter 105, eine beispielsweise torusartige Brennkammer 110, insbesondere Ringbrennkammer 106, mit mehreren koaxial angeordneten Brennern 107, eine Turbine 108 und das Abgasgehäuse 109.
Die Ringbrennkammer 106 kommuniziert mit einem beispielsweise ringförmigen Heißgaskanal 111. Dort bilden beispielsweise vier hintereinander geschaltete Turbinenstufen 112 die Turbine 108. Jede Turbinenstufe 112 ist beispielsweise aus zwei Schaufelringen gebildet. In Strömungsrichtung eines Arbeitsmediums 113 gesehen folgt im Heißgaskanal 111 einer Leitschaufelreihe 115 eine aus Laufschaufeln 120 gebildete Reihe 125.

Die Leitschaufeln 130 sind dabei an einem Innengehäuse 138 eines Stators 143 befestigt, wohingegen die Laufschaufeln 120 einer Reihe 125 beispielsweise mittels einer Turbinenscheibe 133 am Rotor 103 angebracht sind. An dem Rotor 103 angekoppelt ist ein Generator oder eine Arbeitsmaschine (nicht dargestellt).

Während des Betriebes der Gasturbine 100 wird vom Verdichter 105 durch das Ansauggehäuse 104 Luft 135 angesaugt und verdichtet. Die am turbinenseitigen Ende des Verdichters 105 bereitgestellte verdichtete Luft wird zu den Brennern 107 geführt und dort mit einem Brennmittel vermischt. Das Gemisch wird dann unter Bildung des Arbeitsmediums 113 in der Brennkammer 110 verbrannt. Von dort aus strömt das Arbeitsmedium 113 entlang des Heißgaskanals 111 vorbei an den Leitschaufeln 130 und den Laufschaufeln 120. An den Laufschaufeln 120 entspannt sich das Arbeitsmedium 113 impulsübertragend, so dass die Laufschaufeln 120 den Rotor 103 antreiben und dieser die an ihn angekoppelte Arbeitsmaschine.

Die dem heißen Arbeitsmedium 113 ausgesetzten Bauteile unterliegen während des Betriebes der Gasturbine 100 thermischen Belastungen. Die Leitschaufeln 130 und Laufschaufeln 120 der in Strömungsrichtung des Arbeitsmediums 113 gesehen ersten Turbinenstufe 112 werden neben den die Ringbrennkammer 106 auskleidenden Hitzeschildsteinen am meisten thermisch belastet.
Um den dort herrschenden Temperaturen standzuhalten, können diese mittels eines Kühlmittels gekühlt werden.
Ebenso können Substrate der Bauteile eine gerichtete Struktur aufweisen, d.h. sie sind einkristallin (SX-Struktur) oder weisen nur längsgerichtete Körner auf (DS-Struktur).
Als Material für die Bauteile, insbesondere für die Turbinenschaufel 120, 130 und Bauteile der Brennkammer 110 werden beispielsweise eisen-, nickel- oder kobaltbasierte Superlegierungen verwendet.
Solche Superlegierungen sind beispielsweise aus der EP 1 204 776 B1, EP 1 306 454, EP 1 319 729 A1, WO 99/67435 oder WO 00/44949 bekannt; diese Schriften sind Teil der Offenbarung.

Ebenso können die Schaufeln 120, 130 Beschichtungen gegen Korrosion (MCrA1X; M ist zumindest ein Element der Gruppe Eisen (Fe), Kobalt (Co), Nickel (Ni), X ist ein Aktivelement und steht für Yttrium (Y) und/oder Silizium und/oder zumindest ein Element der Seltenen Erden bzw. Hafnium).

Solche Legierungen sind bekannt aus der EP 0 486 489 B1, EP 0 786 017 B1, EP 0 412 397 B1 oder EP 1 306 454 A1, die Teil dieser Offenbarung sein sollen.

Auf der MCrAlX kann noch eine Wärmedämmschicht vorhanden sein, und besteht beispielsweise aus ZrO₂, Y₂O₄-ZrO₂, d.h. sie ist nicht, teilweise oder vollständig-stabilisiert durch Yttriumoxid und/oder Kalziumoxid und/oder Magnesiumoxid. Durch geeignete Beschichtungsverfahren wie z.B. Elektronenstrahlverdampfen (EB-PVD) werden stängelförmige Körner in der Wärmedämmschicht erzeugt.

Die Leitschaufel 130 weist einen dem Innengehäuse 138 der Turbine 108 zugewandten Leitschaufelfuß (hier nicht dargestellt) und einen dem Leitschaufelfuß gegenüberliegenden Leitschaufelkopf auf. Der Leitschaufelkopf ist dem Rotor 103 zugewandt und an einem Befestigungsring 140 des Stators 143 festgelegt.

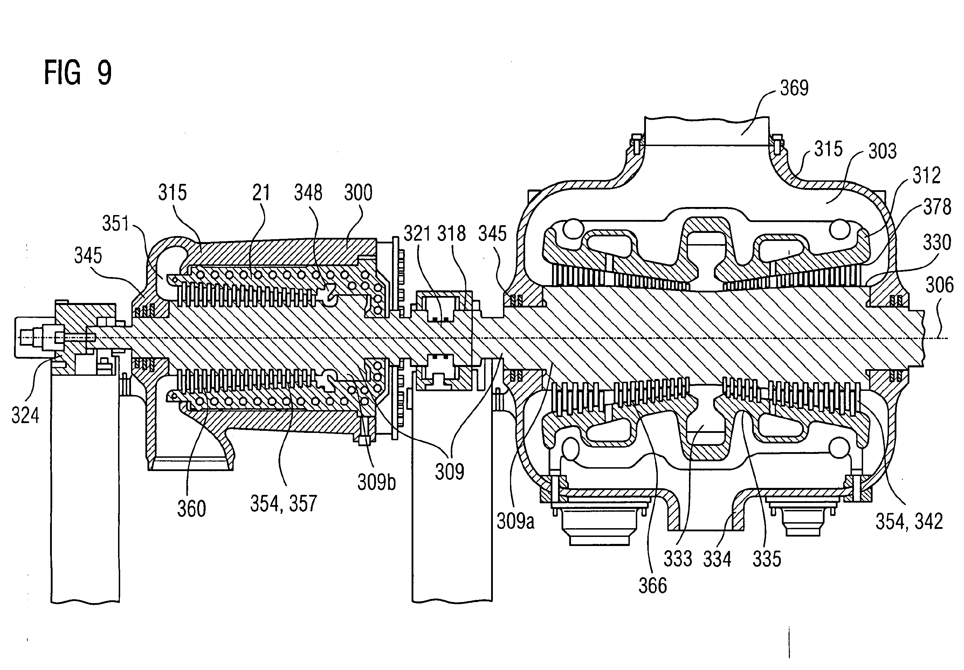

In Figur 9 ist beispielhaft eine Dampfturbine 300, 303 mit einer sich entlang einer Rotationsachse 306 erstreckenden Turbinenwelle 309 dargestellt.

Die Dampfturbine weist eine Hochdruck-Teilturbine 300 und eine Mitteldruck-Teilturbine 303 mit jeweils einem Innengehäuse 312 und einem dieses umschließenden Außengehäuses 315 auf.
Die Hochdruck-Teilturbine 300 ist beispielsweise in Topfbauart ausgeführt.
Die Mitteldruck-Teilturbine 303 ist zweiflutig ausgeführt.
Es ist ebenfalls möglich, dass die Mitteldruck-Teilturbine 303 einflutig ausgeführt ist.
Entlang der Rotationsachse 306 ist zwischen der Hochdruck-Teilturbine 300 und der Mitteldruck-Teilturbine 303 ein Lager 318 angeordnet, wobei die Turbinenwelle 309 in dem Lager 318 einen Lagerbereich 321 aufweist. Die Turbinenwelle 309 ist auf einem weiteren Lager 324 neben der Hochdruck-Teilturbine 300 aufgelagert. Im Bereich dieses Lagers 324 weist die Hochdruck-Teilturbine 300 eine Wellendichtung 345 auf. Die Turbinenwelle 309 ist gegenüber dem Außengehäuse 315 der Mitteldruck-Teilturbine 303 durch zwei weitere Wellendichtungen 345 abgedichtet. Zwischen einem Hochdruck-Dampfeinströmbereich 348 und einem Dampfaustrittsbereich 351 weist die Turbinenwelle 309 in der Hochdruck-Teilturbine 300 die Hochdruck-Laufbeschaufelung 354, 357 auf. Diese Hochdruck-Laufbeschaufelung 354, 357 stellt mit den zugehörigen, nicht näher dargestellten Laufschaufeln einen ersten Beschaufelungsbereich 360 dar. Die Mitteldruck-Teilturbine 303 weist einen zentralen Dampfeinströmbereich 333 auf. Dem Dampfeinströmbereich 333 zugeordnet weist die Turbinenwelle 309 eine radialsymmetrische Wellenabschirmung 363, eine Abdeckplatte, einerseits zur Teilung des Dampfstromes in die beiden Fluten der Mitteldruck-Teilturbine 303 sowie zur Verhinderung eines direkten Kontaktes des heißen Dampfes mit der Turbinenwelle 309 auf. Die Turbinenwelle 309 weist in der Mitteldruck-Teilturbine 303 einen zweiten Beschaufelungsbereich 366 mit den Mitteldruck-Laufschaufeln 354, 342 auf. Der durch den zweiten Beschaufelungsbereich 366 strömende heiße Dampf strömt aus der Mitteldruck-Teilturbine 303 aus einem Abströmstutzen 369 zu einer strömungstechnisch nachgeschalteten, nicht dargestellten Niederdruck-Teilturbine.

Auch die Bauteile einer Dampfturbine, insbesondere die Bauteile, die ausgewechselt werden können, können die erfindungsgemäße Markierung 1 aufweisen.

## Patentansprüche

1. Markierung (1) zur Erkennung eines Bauteils (7, 120, 130, 155, 354, 357),
die zumindest aus einem Material mit magnetischen und/oder - elektrischen und/oder elektromagnetischen Eigenschaften besteht,
**dadurch gekennzeichnet, dass**
die Markierung (1) lokal unterschiedliche magnetische, elektrische und/oder elektromagnetische Eigenschaften aufweist.

2. Markierung nach Anspruch 1,
**dadurch gekennzeichnet, dass**
die Markierung (1) Körner (22) zur Erzeugung der lokalen Unterschiedlichkeit der magnetischen, elektrischen und/oder elektromagnetischen Eigenschaften enthält.

3. Markierung nach Anspruch 2,
**dadurch gekennzeichnet, dass**
die Körner (22) aus unterschiedlichem Material sind.

4. Markierung nach Anspruch 2,
**dadurch gekennzeichnet, dass**
die Körner (22) aus demselben Material sind.

5. Markierung nach Anspruch 1, 2, 3 oder 4,
**dadurch gekennzeichnet, dass**
die Markierung (1) größtenteils aus Körnern (22), insbesondere zu 70vol% besteht.

6. Markierung nach Anspruch 2, 3, 4 oder 5,
**dadurch gekennzeichnet, dass**
dass die Markierung (1) Körner (22) in Form von Nanopartikeln aufweist.

7. Markierung (1) nach Anspruch 1, 2, 3 oder 4,
**dadurch gekennzeichnet, dass**
die Markierung (1) in Segmente (4ᵢ) unterteilt ist.

8. Markierung nach Anspruch 7,
**dadurch gekennzeichnet, dass**
die Segmente (4ᵢ) die gleiche Breite (bᵢ) aufweisen.

9. Markierung nach Anspruch 7,
**dadurch gekennzeichnet, dass**
die Segmente (4ᵢ) unterschiedliche Breiten (bᵢ) aufweisen.

10. Markierung nach Anspruch 1, 7, 8 oder 9,
**dadurch gekennzeichnet, dass**
die Markierung (1) eine numerische oder alphanumerische Abfolge darstellt.

11. Markierung nach Anspruch 7, 8 oder 9,
**dadurch gekennzeichnet, dass**
die Segmente (4ᵢ) verschiedene Materialien aufweisen.

12. Markierung nach Anspruch 7, 8 oder 9,
**dadurch gekennzeichnet,**
**dass** die Segmente (4ᵢ) jeweils dasselbe Material aufweisen und
**dass** die Segmente (4ᵢ) unterschiedliche Werte für die magnetischen oder elektrischen oder elektromagnetischen Kennwerte aufweisen.

13. Markierung nach Anspruch 11,
**dadurch gekennzeichnet, dass**
die Segmente (4ᵢ) verschiedene Materialien aufweisen, die jeweils eine charakteristische Ausprägung einer Eigenschaft ausgewählt aus der Gruppe der magnetischen, elektrischen oder elektromagnetischen Eigenschaften, aufweisen.

14. Bauteil (7, 120, 130, 155, 354, 357),
das eine Markierung (1) gemäß einem oder mehreren der Ansprüche 1 bis 13 aufweist.

15. Bauteil nach Anspruch 14,
**dadurch gekennzeichnet, dass**
die Markierung (1) in einer Vertiefung (10) des Bauteils (7, 120, 130, 155, 354, 357) angeordnet ist.

16. Bauteil nach Anspruch 14,
**dadurch gekennzeichnet, dass**
die Markierung (1) auf einer Oberfläche (13) des Bauteils (7, 120, 130, 155, 354, 357) angeordnet ist.
